(19) **Europäisches Patentamt / European Patent Office / Office européen des brevets**

(11) **EP 4 380 038 B1**

(12) # FASCICULE DE BREVET EUROPEEN

(45) Date de publication et mention
de la délivrance du brevet:
**04.06.2025 Bulletin 2025/23**

(21) Numéro de dépôt: **23209979.6**

(22) Date de dépôt: **15.11.2023**

(51) Classification Internationale des Brevets (IPC):
**H02P 21/00** (2016.01)   **H02P 25/024** (2016.01)
**H02P 25/026** (2016.01)   **H02P 29/50** (2016.01)

(52) Classification Coopérative des Brevets (CPC):
**H02P 21/00; H02P 25/024; H02P 25/026;
H02P 29/50**

(54) **PROCÉDÉ DE COMMANDE D'UNE MACHINE ÉLECTRIQUE PILOTÉE PAR UN ONDULEUR COMMANDE PAR UN CALCULATEUR**

VERFAHREN ZUR STEUERUNG EINER VON EINEM RECHNER GESTEUERTEN WECHSELRICHTER GESTEUERTEN ELEKTRISCHEN MASCHINE

METHOD FOR CONTROLLING AN ELECTRIC MACHINE CONTROLLED BY AN INVERTER CONTROLLED BY A COMPUTER

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.11.2022 FR 2212481**

(43) Date de publication de la demande:
**05.06.2024 Bulletin 2024/23**

(73) Titulaire: **IFP Energies nouvelles
92500 Rueil-Malmaison (FR)**

(72) Inventeurs:
• **VIDAL-NAQUET, Fabien
92852 RUEIL-MALMAISON CEDEX (FR)**
• **LEPAGE, Thierry
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
**FR-A1- 3 042 926    FR-A1- 3 050 083**

## Description

### Domaine technique

La présente invention concerne un procédé de commande d'une machine électrique tournante, de préférence une machine électrique synchrone, par exemple du type synchro-réluctante ou synchrone à aimants permanents.

L'invention concerne également un système de commande mettant en œuvre un tel procédé.

Il est connu d'avoir recours à des machines électriques tournantes telles que des machines électriques synchrones à aimants permanents ou des machines synchro-réluctantes, en particulier des machines synchro-réluctantes assistées d'aimants permanents. De telles machines électriques sont, par exemple, utilisées dans le domaine de la propulsion, par exemple pour la génération de couples moteurs à bord d'un véhicule tel qu'un véhicule automobile.

Le document FR 3 051 296 A1 décrit, par exemple, une machine synchro-réluctante assistée d'aimants permanents.

Le document FR 3 050 083 B1 divulgue un dispositif de conversion de puissance électrique continu-alternatif comprenant des bornes d'entrées destinées à être électriquement raccordées à un réseau d'alimentation électrique continu, des bornes de sortie destinées à être électriquement raccordées à un moteur électrique, un convertisseur électrique à découpage couplé auxdites bornes d'entrée et un onduleur électrique couplé entre le convertisseur électrique à découplage et lesdites bornes de sortie. Le dispositif de conversion comprend une unité de commande de l'onduleur électrique configurée pour fonctionner en modulation par largeur d'impulsion pré-calculée avec des instants de commutation des commutateurs commandés de l'onduleur électrique fixes pré-calculés quelles que soient la fréquence de rotation du moteur et la tension du réseau électrique destinés à être raccordés audit dispositif.

Le document FR 3 042 926 B1 divulgue un procédé de commande d'une machine tournante électrique comprenant un onduleur couplé entre un réseau d'alimentation électrique et la machine tournante électrique, comprenant une modulation du nombre, de la largeur, et de l'amplitude des impulsions du signal périodique de tension d'alimentation de la machine tournante électrique en fonction de la vitesse de fonctionnement de la machine tournante électrique pour surélever la tension d'entrée d'onduleur lors des phases de haute vitesse et découper fréquentiellement le signal de tension de commande lors des phases de basse vitesse.

Afin d'augmenter la densité de puissance des machines électriques synchrones dans le domaine du transport, ceux-ci fonctionnent à des fréquences électriques et fréquences de rotation de plus en plus élevées. Cette montée en fréquence électrique des machines électriques, pilotées par des électroniques de puissance à la fréquence de découpage limitée, peut conduire à l'apparition de phénomènes harmoniques délétères.

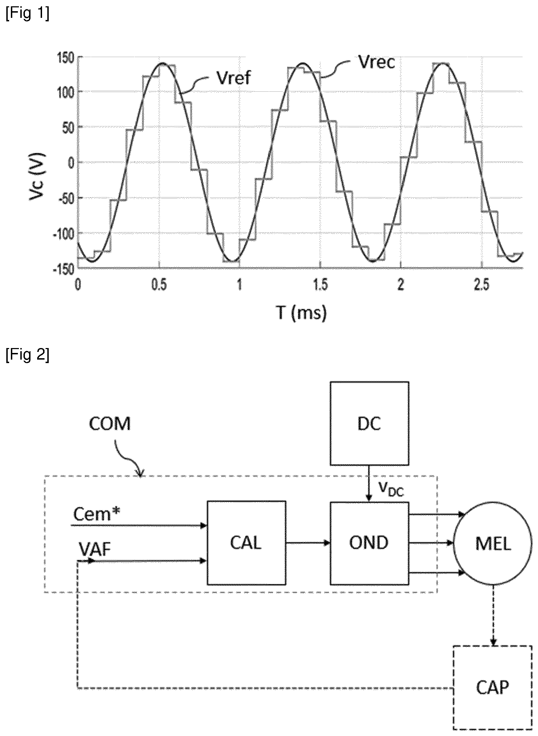

En effet, le procédé dit de « découpage » (ou Modulation à Largeur d'Impulsion, MLI ou PWM de l'anglais Pulse Width Modulation) repose sur l'idée qu'une sinusoïde (en l'occurrence de tension de commande d'une machine électrique) peut être « découpée » en une suite de valeurs constantes, comme illustré sur la figure 1. La figure 1 est une courbe de la tension Vc en V en fonction du temps T en ms. La courbe Vref est la courbe de tension sinusoïdale optimale, et la courbe Vrec est une courbe de tension obtenue par une méthode de découpage qui approxime la courbe de référence. On peut constater que l'approximation de la courbe de référence dépend de la période de découpage. De plus, lorsque le nombre de valeurs par période se réduit, la résultante Vrec n'est pas identique d'une période électrique Vref à l'autre. Cela est dû au fait que la sinusoïde de commande est nécessairement de fréquence électrique (associée à la vitesse de rotation du moteur synchrone), tandis que le plus souvent le « découpage » est opéré à une fréquence temporelle constante. On peut avoir par exemple une fréquence de découpage classique à 10kHz pour une machine électrique en rotation à 916Hz.

L'asynchronisme ici décrit peut dans certains cas conduire à l'apparition de phénomènes non désirés, comme l'émergence de basses fréquences dans la commande, voire une instabilité des courants pilotés.

### Technique antérieure

Une solution est de synchroniser la fréquence de découpage et la fréquence électrique, on parle alors de méthode MLI « synchrone ». Typiquement, on s'assure que la fréquence de découpage s'ajuste dynamiquement à la fréquence électrique de la machine électrique, afin que la résultante « en paliers » de la commande soit toujours identique d'une période à l'autre. On peut alors écrire que : $f_{dec} = K \times f_e$ avec $f_{dec}$ la fréquence de découpage et $f_e$ la fréquence électrique, où K n'est pas forcément constant, mais toujours entier.

Le document suivant décrit une telle méthode MLI « synchrone » : « A. O. DI TOMMASO et al., Practical implementation of a synchronous PWM strategy for low switching frequency FOC of IM drives with ATSAM3X8E microcontroller, mai 2021, 2021 Sixteenth International Conference on Ecological Vehicles and Renewable Energies (EVER) ».

Ainsi, la MLI synchrone est également tout indiquée pour améliorer la gestion des phénomènes harmoniques naturellement présents par ailleurs dans les machines électriques synchrones.

Cependant, cette approche fait apparaitre une problématique d'asynchronisme entre les calculs de MLI (synchrone avec la machine électrique) et d'autres calculs à fréquence temporelle fixe au sein du système de commande de la machine électrique.

En effet, il existe en général dans les algorithmes de pilotage des machines électriques des fonctions qui sont exécutées à des fréquences bien plus faibles que la fréquence de découpage. Par exemple, le calcul des consignes de courants peut classiquement se réaliser plutôt à 1kHz puisqu'il dépend souvent d'une consigne de couple ou de vitesse, associée à un système mécanique dont la bande passante est bien plus faible que celle d'un système électrique. Selon la même logique, les fonctions associées aux phénomènes thermiques ont vocation à être exécutées à des fréquences de l'ordre de 100Hz, voire 10Hz.

Il serait peu intéressant d'exécuter ces fonctions plus rapidement, ou de manière synchrone à la fréquence de la machine électrique, puisque cela complexifierait le code de calcul, voire représenterait un temps de calcul rédhibitoire pour le microprocesseur.

Ainsi, pour la « méthode MLI synchrone », l'asynchronisme classiquement présent entre la fréquence de découpage et la fréquence électrique se retrouve déplacé entre des fonctions de calcul dites « lentes » et naturellement temporelles et la fonction de découpage « rapide ».

Il est certain que la problématique associée à l'asynchronisme dans ce cas est moins immédiatement significative. Cependant, cela se traduit par un déterminisme réduit de la commande, en raison de sa dépendance au temps de réalisation effectif des calculs, qui est par nature imprévisible. En effet, une fonction de calcul met à disposition d'une autre fonction de calcul des variables calculées, qui ne seront donc pas toujours « partagées » au même instant, puisqu'elles le sont quand le calcul est terminé.

Finalement, cela favorise l'apparition de phénomènes aléatoires contradictoires aux besoins de sécurité de fonctionnement des systèmes.

**Résumé de l'invention**

Le but de l'invention est de contrôler une machine électrique, tout en limitant l'apparition de phénomènes harmoniques délétères et tout en répondant aux besoins de sécurité des systèmes. Pour cela, la présente invention concerne un procédé de commande d'une machine électrique, qui détermine une fréquence électrique, puis en déduit la fréquence de découpage, puis la fréquence de calcul des fonctions de calcul « lentes ». Ainsi, les différentes fréquences sont synchrones, ce qui permet de limiter l'apparition de phénomènes harmoniques délétères, et en assurant le bon fonctionnement des systèmes répondant aux besoins de sécurité des systèmes (sans phénomènes aléatoires contradictoires).

L'invention concerne également un système de commande mettant en œuvre un tel procédé.

L'invention concerne un procédé de commande d'une machine électrique pilotée par un onduleur commandé par un calculateur, ledit procédé de commande étant conçu pour faire appliquer une fréquence de découpage du courant électrique par ledit onduleur à ladite machine électrique, et pour faire réaliser un calcul à au moins une fonction dudit calculateur à une fréquence temporelle de calcul, chaque fonction dudit calculateur ayant une fréquence temporelle de calcul de référence. Pour ce procédé, on met en œuvre les étapes suivantes :

a. On acquiert une fréquence électrique de ladite machine électrique ;
b. On applique une fréquence de découpage audit onduleur de telle sorte que ladite fréquence de découpage soit proportionnelle à ladite fréquence électrique déterminée, un coefficient de proportionnalité entre ladite fréquence de découpage et ladite fréquence électrique étant un nombre entier ; et
c. On applique une fréquence temporelle de calcul à au moins une fonction dudit calculateur de telle sorte que la fréquence de découpage soit proportionnelle à ladite fréquence temporelle de calcul, un coefficient de proportionnalité entre ladite fréquence de découpage et ladite fréquence temporelle de calcul étant un nombre entier variable, et de telle sorte que la moyenne de la fréquence temporelle de calcul soit égale à ladite fréquence temporelle de calcul de référence.

Selon un mode de réalisation, ladite fonction dudit calculateur est choisi parmi une fonction de détermination des consignes de courant, un estimateur thermique, un estimateur de flux magnétique.

Conformément une mise en œuvre, on détermine ladite fréquence électrique de ladite machine électrique au moyen d'une formule $f_e = 2\pi\omega_e$ avec $f_e$ ladite fréquence électrique, $\omega_e$ une vitesse de rotation électrique du rotor de ladite machine électrique.

Avantageusement, on détermine ladite vitesse de rotation électrique par multiplication d'une vitesse de rotation mécanique du rotor de ladite machine électrique par le nombre de paires de pôles de ladite machine électrique.

De manière avantageuse, ladite vitesse de rotation mécanique de ladite machine électrique est mesurée au moyen d'un capteur de position angulaire ou d'un capteur de vitesse de rotation.

Selon un aspect, la moyenne de la fréquence temporelle de calcul est déterminée sur une fenêtre temporelle.

L'invention concerne également un procédé de commande selon l'une des caractéristiques précédentes, dans lequel on met en œuvre les étapes suivantes :

a. On détermine, au moyen dudit calculateur et à ladite fréquence temporelle de calcul, des consignes de courant en fonction d'au moins une consigne de couple et/ou d'une consigne de vitesse de rotation ;

b. On détermine, au moyen dudit calculateur, des consignes de tension à partir des consignes de courant déterminées ;

c. On génère, au moyen dudit calculateur, un signal de commande de commutation dudit onduleur à partir desdites consignes de tension, la fréquence dudit signal de commande de commutation étant ladite fréquence de découpage ; et

d. On commande ledit onduleur au moyen dudit signal de commutation.

De manière avantageuse, on met en œuvre en outre au moins une étape d'estimation d'au moins une température et/ou d'au moins un flux magnétique au sein de ladite machine électrique, au moyen dudit calculateur et à ladite fréquence temporelle de calcul.

Avantageusement, on détermine lesdites consignes de courant et/ou lesdites consignes de tension au moyen de ladite estimation d'au moins une température et/ou d'au moins un flux magnétique au sein de ladite machine électrique.

En outre, l'invention concerne un système de commande d'une machine électrique comprenant un onduleur pourvu de bras de commutation, un calculateur et une mémoire configurée pour mettre en œuvre les étapes du procédé de commande selon l'une des caractéristiques précédentes pour appliquer ladite fréquence de découpage dudit onduleur et pour appliquer ladite fréquence temporelle de calcul d'au moins une fonction dudit calculateur, de préférence ladite machine électrique est une machine synchro-réluctante assistée par des aimants permanents ou une machine synchrone à aimants permanents.

D'autres caractéristiques et avantages du procédé et du système selon l'invention, apparaîtront à la lecture de la description ci-après d'exemples non limitatifs de réalisations, en se référant aux figures annexées et décrites ci-après.

**Liste des figures**

La figure 1, déjà décrite, illustre des courbes de tension sinusoïdales respectivement de référence et obtenue par une méthode de découpage.

La figure 2 illustre un système de commande pour la mise en œuvre du procédé de commande selon un mode de réalisation de l'invention.

La figure 3 illustre un système de commande pour la mise en œuvre du procédé de commande selon un mode de réalisation de l'invention.

La figure 4 illustre les signaux électriques, de découpage, et de calcul pour un procédé de commande selon un art antérieur sans synchronisme.

La figure 5 illustre les signaux électriques, de découpage, et de calcul pour un procédé de commande selon un art antérieur avec synchronisme de la fréquence de découpage avec la fréquence électrique.

La figure 6 illustre les signaux électriques, de découpage, et de calcul pour un procédé de commande selon un mode de réalisation de l'invention.

La figure 7 illustre une courbe de vitesse de rotation en fonction du temps pour un exemple d'application.

La figure 8 illustre une variation du coefficient de proportionnalité en fonction du temps pour l'exemple d'application de la figure 7.

La figure 9 illustre la période du signal de calcul en fonction de temps pour l'exemple d'application des figures 7 et 8.

## Description des modes de réalisation

Sur la figure 2 est représentée, schématiquement et de manière non limitative, une installation comprenant une machine électrique tournante MEL associée, pour sa commande, à un système de commande COM selon l'invention (le système de commande COM mettant en œuvre le procédé de commande selon l'invention). L'installation comporte également une source DC d'énergie électrique, telle qu'un bus de tension continue.

La machine électrique tournante MEL est une machine tournante avec plusieurs phases, de préférence trois phases (alternativement la machine électrique peut comporter un nombre de phases multiple de trois, par exemple six, neuf ou douze, ou encore quatre ou cinq phases). Avantageusement, la machine électrique tournante MEL peut être une machine électrique synchrone. De préférence, la machine électrique synchrone MEL peut être une machine électrique synchrone à aimants permanents ou synchro-réluctante, en particulier une machine tournante triphasée synchro-réluctante assistée d'aimants permanents.

Pour l'exemple illustré (non limitatif), la machine électrique synchrone MEL comporte trois entrées. Chaque entrée correspond à une phase d'un stator (non représenté) de la machine électrique tournante MEL.

Le système de commande COM est destiné à piloter, au cours du temps, l'alimentation de la machine tournante MEL en fonction de valeurs cibles et/ou de valeurs mesurées de grandeurs prédéterminées. Ces valeurs cibles et/ou valeurs mesurées sont appelées dans la suite de la description variables de fonctionnement de la machine électrique. Pour le procédé et le système selon l'invention, le système de commande COM prend en compte une consigne de couple Cem* (qui peut provenir classiquement d'une demande de l'utilisateur de la machine électrique, alternativement cette consigne de couple peut être calculée par une régulation de vitesse), et/ou au moins une autre variable de fonctionnement VAF qui peut être une mesure ou une consigne. On appelle variable de fonctionnement de la machine électrique, une grandeur qui caractérise le fonctionnement de la machine électrique, il peut s'agir notamment d'une variable électrique, comme la tension, le courant, ou la puissance de la machine électrique, une variable mécanique comme la position, la vitesse ou l'accélération du rotor de la machine électrique, etc. Les variables de fonctionnement peuvent par exemple être la vitesse de rotation électrique $\omega_e$ du rotor (non représenté) de la machine électrique (alternativement cette variable peut aussi être la norme du flux magnétique dans les phases), l'amplitude de tension de la machine électrique, l'amplitude du courant de la machine électrique, une température de la machine électrique, etc. On rappelle que la vitesse de rotation électrique $\omega_e$ du rotor correspond à la multiplication de la vitesse de rotation mécanique $\omega_m$ du rotor par le nombre de paires de pôles de la machine électrique synchrone MEL. En d'autres termes, on peut écrire : $\omega_e = p.\omega_m$ avec p le nombre de paires de pôles de la machine électrique synchrone MEL. Cette vitesse de rotation électrique permet de déterminer la fréquence électrique de la machine électrique.

Le système de commande COM comporte un onduleur OND et un calculateur CAL. Le système de commande COM peut comporter si besoin un capteur CAP de position angulaire et/ou de vitesse de rotation angulaire du rotor de la machine électrique MEL. Un tel capteur permet de déterminer la vitesse de rotation angulaire $\omega_m$ de la machine électrique soit directement (cas d'un capteur de vitesse), soit par dérivation (cas du capteur de position). En outre, le système de commande COM peut comporter des moyens de mesure des courants (non représentés) dans les phases de la machine électrique, par exemple des capteurs de courant.

L'onduleur OND est configuré pour acheminer de l'énergie électrique entre la source DC et la machine électrique synchrone MEL. Plus précisément, l'onduleur OND est configuré pour acheminer de l'énergie électrique entre la source DC et chaque phase du stator de la machine électrique synchrone MEL. La source DC (par exemple une batterie) fournit une tension de bus continu, notée $V_{DC}$.

L'onduleur OND comporte une première entrée reliée à la source DC, et trois sorties, chacune reliée à une phase correspondante du stator de la machine électrique synchrone MEL. L'onduleur OND comporte, en outre, une deuxième entrée électriquement reliée à une sortie du calculateur CAL, de sorte que l'onduleur OND est configuré pour acheminer de l'énergie électrique entre la source DC et la machine électrique synchrone MEL en fonction d'un signal de commande de commutation appliqué par le calculateur CAL à la deuxième entrée de l'onduleur OND.

De préférence, le signal de commande de commutation peut être tel que l'onduleur OND achemine de l'énergie électrique depuis la source DC vers la machine électrique synchrone MEL de sorte que la machine électrique synchrone MEL présente un fonctionnement communément appelé « moteur » et/ou un fonctionnement communément appelé « générateur ». Classiquement, l'onduleur OND comporte plusieurs bras de commutation (non représentés), de préférence au moins un bras de commutation pour chaque phase de la machine électrique, pour transformer le signal continu depuis la source DC en un signal alternatif pour les phases de la machine électrique MEL. Chaque bras de commutation comporte au moins un commutateur commandé. De manière classique, on peut commander chaque commutateur des bras de commutation au moyen d'une modulation de largeur d'impulsion connu sous l'acronyme MLI (ou PWM de l'anglais Pulse Width Modulation).

Le capteur optionnel de position angulaire ou de vitesse de rotation angulaire CAP peut être configuré pour mesurer la position mécanique angulaire d'un rotor (non représenté) de la machine électrique synchrone par rapport au stator (non représenté), et pour délivrer un signal de position angulaire (respectivement de vitesse de rotation angulaire) représentatif de la valeur mesurée de la position angulaire (respectivement de la vitesse de rotation angulaire) du rotor de la machine électrique synchrone.

En outre, le capteur optionnel CAP de position angulaire ou de vitesse de rotation angulaire peut être configuré pour appliquer le signal de position angulaire (respectivement de vitesse de rotation angulaire) à une entrée correspondante du calculateur CAL.

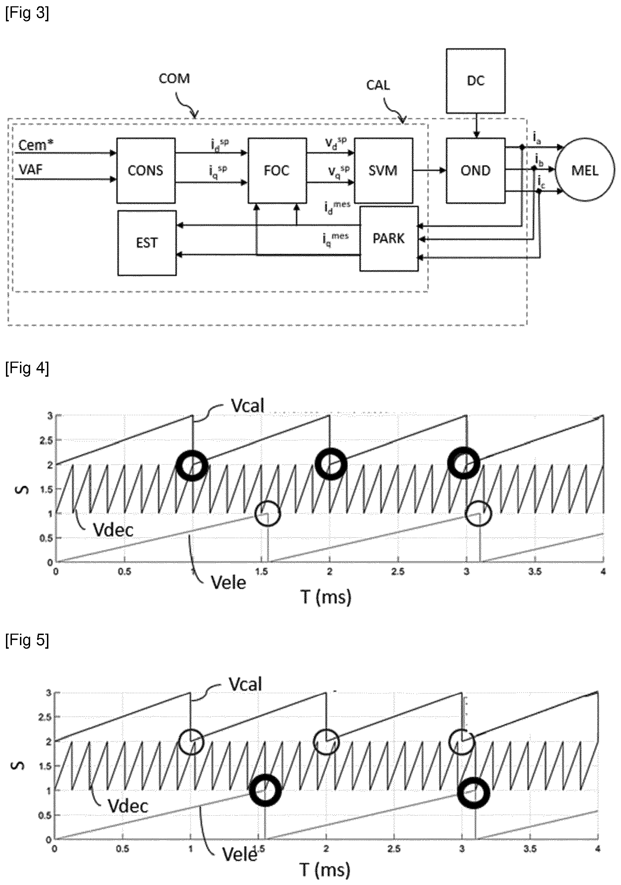

La figure 3 illustre, schématiquement et de manière non limitative, une installation comprenant une machine électrique tournante MEL associée, pour sa commande, à un système de commande COM selon un mode de réalisation de l'invention (le système de commande COM mettant en œuvre le procédé de commande selon l'invention). La figure 3 est un exemple de réalisation du système de commande de la figure 2. D'autres mises en œuvre du système de la figure 2 peuvent être réalisées sans sortir du cadre de l'invention (par exemple les réalisations décrites dans les demandes de brevet WO2021/259662 et WO2022/078778 ou dans les demandes de brevet portant les numéros de dépôt FR21/13962 et FR22/00475). Les éléments identiques à la figure 2 ne sont pas redécrits.

Le calculateur CAL utilise des mesures de courant $i_a$, $i_b$, $i_c$ dans les phases de la machine électrique MEL. De plus, le calculateur CAL comprend :

- Des moyens de transformation PARK dans le repère de Park des courants mesurés, pour déterminer des courants mesurés exprimés en courant direct $i_d^{mes}$ et le courant en quadrature $i_q^{mes}$ (pour rappel : les courants et les tensions dits « directs » et « en quadrature », également appelé « quadratique(s) », sont des courants et des tensions exprimés dans un repère tournant lié au rotor),
- Des moyens de détermination CONS des consignes de courant $i_d^{sp}$ et $i_q^{sp}$, à partir notamment de la consigne de couple Cem* et de la consigne de la variable de fonctionnement VAF, la détermination des consignes de courant CONS est réalisée à une première fréquence temporelle de calcul,
- Des moyens de détermination FOC des consignes de tension $v_d^{sp}$ et $v_q^{sp}$, à partir notamment des consignes de courants $i_d^{sp}$ et $i_q^{sp}$, et des courants mesurés exprimés dans le repère de Park $i_d^{mes}$ et $i_q^{mes}$,
- Un contrôle de vecteur spatial SVM pour générer un signal de commande de commutation pour l'onduleur OND en fonction des consignes de tension $v_d^{sp}$ et $v_q^{sp}$, le signal de commande de l'onduleur est mis en œuvre à une fréquence de découpage, et
- Optionnellement un estimateur EST, par exemple un estimateur thermique ou un estimateur de flux magnétique, pour estimer au moins une température et/ou au moins un flux magnétique d'au moins un composant de la machine électrique à partir des courants mesurés exprimés dans le repère de Park $i_d^{mes}$ et $j_q^{mes}$, l'estimation mise en œuvre par l'estimateur est réalisée à une deuxième fréquence temporelle de calcul.

Le procédé de commande d'une machine électrique selon l'invention est conçu pour faire appliquer une fréquence de découpage du courant électrique par un onduleur à la machine électrique, et pour faire réaliser un calcul à au moins une fonction dudit calculateur à une fréquence temporelle de calcul (cette fréquence est également appelée fréquence de calcul « lent »). Chaque fonction du calculateur a une fréquence temporelle de calcul de référence. On rappelle qu'une fréquence est définie par le nombre de périodes par unité de temps, et la période est la plus petite durée pendant laquelle se reproduit un phénomène. Le procédé de commande d'une machine électrique comprend les étapes suivantes en temps réel :

- Acquisition d'une fréquence électrique de la machine électrique,
- Application d'une fréquence de découpage, de telle sorte que la fréquence de découpage soit proportionnelle à la fréquence électrique, le coefficient de proportionnalité entre ces deux fréquences étant un nombre entier,
- Application d'une fréquence temporelle de calcul, de telle sorte que la fréquence de découpage soit proportionnelle à la fréquence temporelle de calcul, le coefficient de proportionnalité entre ces deux fréquences étant un nombre entier, et de telle sorte que la moyenne de la fréquence temporelle de calcul soit égale à la fréquence temporelle de calcul de référence.

Ces étapes peuvent être mises en œuvre notamment par un calculateur et une mémoire informatique dédiés pour les temps réels. Ces étapes sont détaillées dans la suite de la description.

## 1) Acquisition de la fréquence électrique

Lors de cette étape, on acquiert une fréquence électrique de la machine électrique. En d'autres termes, on acquiert la fréquence électrique du rotor de la machine électrique.

Selon un mode de réalisation de l'invention, on peut déterminer la fréquence électrique à partir de la vitesse de rotation électrique, au moyen d'une formule du type : $f_e = 2\pi\omega_e$ avec $f_e$ la fréquence électrique, $\omega_e$ une vitesse de rotation électrique du rotor de la machine électrique.

De manière avantageuse, la fréquence électrique peut être acquise par multiplication d'une vitesse de rotation mécanique par le nombre de paires de pôles de la machine électrique. On peut ainsi écrire : $\omega_e = p.\omega_m$ avec p le nombre de paires de pôles de la machine électrique synchrone MEL et $\omega_m$ la vitesse de rotation mécanique de la machine électrique.

Avantageusement, on peut mesurer la vitesse de rotation mécanique du rotor, par exemple au moyen d'un capteur de position angulaire du rotor de la machine électrique, ou d'un capteur de vitesse angulaire du rotor de la machine électrique.

Alternativement, on peut estimer la vitesse de rotation mécanique du rotor au moyen d'un estimateur, qui peut dépendre des courants dans les phases de la machine électrique et/ou des consignes de courant et/ou des consignes de tension.

## 2) Application d'une fréquence de découpage

Lors de cette étape, on détermine une fréquence de découpage pour l'onduleur et on l'applique au signal de commande de l'onduleur. La fréquence de découpage est déterminée de telle sorte que la fréquence de découpage soit proportionnelle à la fréquence électrique acquise à l'étape 1. Pour cette proportionnalité, le coefficient de proportionnalité (c'est-à-dire le rapport entre la fréquence de découpage et la fréquence électrique) est un nombre entier. Ainsi, la fréquence de découpage est synchronisée avec la fréquence électrique, ce qui évite la présence d'harmonique, l'apparition de phénomènes non désirés, comme l'émergence de basses fréquences dans la commande, voire une instabilité des courants pilotés. Le coefficient de proportionnalité et la fréquence de découpage peuvent ne pas être constants.

On peut écrire la formule suivante :

$$f_{dec} = K \times f_e$$

Avec $f_{dec}$ la fréquence de découpage, K le coefficient de proportionnalité avec K entier, et $f_e$ la fréquence électrique.

## 3) Application d'une fréquence temporelle de calcul

Lors de cette étape, on détermine une fréquence temporelle de calcul d'au moins une fonction de calcul du calculateur, et on l'applique à la fonction de calcul du calculateur. La fréquence temporelle de calcul est déterminée de telle sorte que la fréquence de découpage déterminée à l'étape 2 soit proportionnelle avec la fréquence temporelle de calcul. Pour cette proportionnalité, le coefficient de proportionnalité (c'est-à-dire le rapport entre la fréquence de découpage et la fréquence temporelle de calcul) est un nombre entier. Ainsi, la fréquence temporelle de calcul est synchronisée avec la fréquence de découpage, ce qui favorise le bon fonctionnement de la commande, et la bonne sécurité du système (car moins de phénomènes aléatoires contradictoires). En outre, la fréquence temporelle est déterminée de telle sorte que la moyenne de la fréquence temporelle de calcul soit égale à la fréquence temporelle de calcul de référence. Ainsi, l'invention permet de garantir la maîtrise des données échangées entre les tâches de fréquences différentes, tout en maintenant la possibilité d'opérer effectivement à fréquence temporelle moyenne fixe. Le coefficient de proportionnalité et la fréquence de calcul peuvent ne pas être constants.

Selon un mode de réalisation, si le calculateur possède plusieurs fonctions de calcul du calculateur ayant des fréquences temporelles de calcul différentes, alors on peut déterminer une fréquence temporelle de calcul par fonction de calcul. Ainsi, chaque fonction de calcul peut être synchronisée avec la fonction de découpage.

En variante, si le calculateur possède plusieurs fonctions de calcul du calculateur ayant des fréquences temporelles de calcul différentes, alors on peut déterminer une unique fréquence temporelle de calcul pour une seule fonction de calcul (appelée fonction de calcul primaire), et on détermine la fréquence temporelle de calcul pour les autres fonctions de calcul par multiplication de la fréquence temporelle de calcul de la fonction de calcul primaire par un coefficient multiplicateur. Le coefficient multiplicateur peut être prédéterminé à partir des fréquences temporelles de calcul de référence. Cette réalisation réduit le nombre de coefficients de proportionnalité à déterminer, et permet une coordination temporelle des fonctions de calcul.

Ainsi, on peut écrire pour une fonction de calcul considérée :

$$f_{dec} = k_i \times f_{cal_i}$$

Et

$$moyenne\left(f_{cal_i}\right) = f_{cal_i,ref}$$

Avec i la fonction de calcul considérée du calculateur, $f_{cal_i}$ la fréquence temporelle de calcul de la fonction considérée i du calculateur, $f_{dec}$ la fréquence de découpage, $k_i$ le coefficient de proportionnalité pour la fonction considérée i du calculateur avec $k_i$ entier, et $f_{cal_i,ref}$ la fréquence temporelle de calcul de référence de la fonction i considérée du calculateur.

On peut également écrire :

$$f_{cal_i} = \frac{K}{k_i} f_e$$

Les figures 4 à 6 illustrent schématiquement et de manière non limitative les différents synchronismes mis en œuvre dans l'invention. Ces figures illustrent les signaux S normalisés en fonction du T en ms. La « dent de scie » permet ici de représenter temporellement un phénomène périodique, qui recommence à chaque descente du signal. On aurait bien pu le représenter par une suite de diracs. Il s'agit du signal électrique Vele représentative de la fréquence électrique, du signal de découpage Vdec représentative de la fréquence de découpage, et du signal de calcul Vcal représentative de la fréquence temporelle de calcul. Sur ces figures, les signaux sont illustrés à des niveaux de différents pour une meilleure lisibilité. De plus, les fins des périodes de calcul et électrique sont illustrées par des cercles. Lorsque les cercles sont en trait épais, alors il y a un synchronisme avec la fréquence de découpage. Lorsque les cercles sont en trait fin, alors il n'y a pas de synchronisme avec la fréquence de découpage.

La figure 4 illustre les courbes pour une solution de l'art antérieur, dans laquelle aucun synchronisme n'est prévu entre la fréquence de découpage et la fréquence électrique. Pour cette configuration, on remarque que les fins des périodes électriques ne correspondent pas au même moment de la fréquence de découpage, et que les fins des périodes de calcul correspondent aux fins de périodes de découpage.

La figure 5 illustre les courbes pour une solution de l'art antérieur, dans laquelle un synchronisme est prévu entre la fréquence de découpage et la fréquence électrique, qui correspond à la méthode MLI synchrone. Pour cette configuration, on remarque que les fins des périodes électriques correspondent à des fins de périodes de découpage, alors que les fins des périodes de calcul ne correspondent pas à des fins de périodes de découpage.

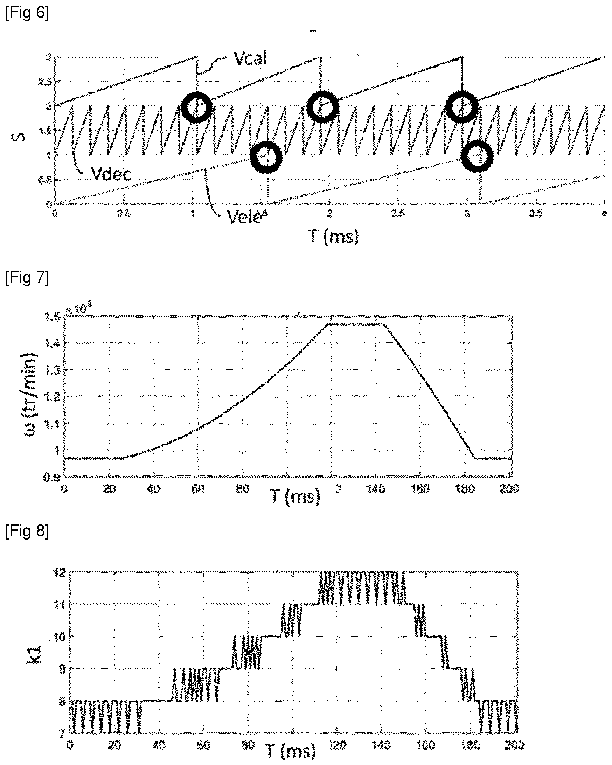

La figure 6 illustre les courbes pour une solution selon un mode de réalisation de l'invention, dans laquelle un synchronisme est prévu entre la fréquence de découpage et la fréquence électrique, ainsi qu'un synchronisme entre la fréquence de découpage et la fréquence temporelle de calcul. Pour cette configuration, on remarque que les fins des périodes électriques correspondent à des fins de périodes de découpage, et les fins des périodes de calcul correspondent à des fins de périodes de découpage, mais avec une durée adaptative de la période temporelle de calcul. Pour l'exemple illustré, la première itération de ce calcul est mise en œuvre sur huit périodes de découpage (lié à la fréquence de découpage), alors que la deuxième itération de ce calcul est mise en œuvre sur sept périodes de découpage.

La fonction de calcul du calculateur peut être choisie notamment parmi une détermination des consignes de courant (CONS sur la figure 3), un estimateur thermique qui détermine au moins une température d'un composant de la machine électrique (EST sur la figure 3), un estimateur de flux magnétique qui détermine au moins un flux magnétique d'un composant de la machine électrique (EST sur la figure 3), ou toute fonction de calcul analogue.

A titre d'exemple, la fréquence temporelle de calcul de référence d'une détermination des consignes de courant peut se réaliser à une fréquence comprise entre 0,5 kHZ et 5kHz, et peut valoir 1kHz.

A titre d'exemple, la fréquence temporelle de calcul de référence d'un estimateur thermique ou d'un estimateur de flux magnétique peut se réaliser à une fréquence comprise 10Hz et 100Hz.

Conformément à une mise en œuvre de l'invention, on peut déterminer et/ou vérifier la moyenne de la fréquence temporelle de calcul sur une fenêtre temporelle. Par exemple, la fenêtre temporelle peut être comprise entre 10 et 100 périodes de la fréquence temporelle de calcul. Selon un autre exemple, la fenêtre temporelle peut être comprise entre 10 ms et 100 ms. Alternativement, on peut déterminer et/ou vérifier la moyenne de fréquence temporelle de calcul depuis le début du signal ; il s'agit alors d'une moyenne globale.

Dans la suite, on décrit une mise en œuvre de cette étape selon un mode de réalisation. Toutefois, d'autres modes de réalisation sont possibles.

On peut noter :

- $T_{sp}$ : la référence de la période temporelle de calcul « lent » (liée à la fréquence temporelle de calcul), par exemple 1 ms.
- $ti_{slow}$ : l'instant passé du début d'exécution du calcul « lent » courant
- $t$ : l'instant « courant » (début d'une tâche de découpage)
- $t_{préc}$ : l'instant du début de tâche de découpage précédent

- $Dt$ : la durée entre $ti_{slow}$ et le prochain début de calcul de référence (liée à la fréquence temporelle de calcul de référence), qui pourrait se noter $T_{sp}*n$ si l'on était à la n-ième période de calcul.

L'enjeu ici est de déterminer un algorithme qui permette de décider s'il faut déclencher une nouvelle exécution d'un calcul « lent » sur la base des dernières données publiées par la tâche rapide de découpage.

On remarque que la durée $Dt$ peut se calculer par récurrence sans se préoccuper du nombre de périodes lentes passées. En effet :

$$Dt(n) = T_{sp}*n - ti_{slow}(n) \text{ et donc } Dt(n+1) = T_{sp}*(n+1) - ti_{slow}(n+1)$$

$$\text{Donc} \quad Dt(n+1) = Dt(n) + T_{sp} - (ti_{slow}(n+1) - ti_{slow}(n))$$

Or, la décision de déclenchement d'un nouveau calcul « lent » se fait à l'instant courant, et seule cette décision justifie de mettre à jour $Dt$. Ainsi :

$$Dt(n+1) = Dt + T_{sp} - (t - ti_{slow})$$

réalise cette mise à jour dès que la décision est prise.

$Dt$ représente la durée idéale que la période lente courante devrait avoir pour obtenir une période en moyenne égale à 1 ms (valeur à titre indicatif). Il s'agit donc de la référence (appelée aussi cible).

Finalement, l'algorithme de décision selon ce mode de réalisation peut s'écrire :

- Si $(t - ti_{slow}) + (t - t_{préc})/2 > Dt$       *(Décision)*
  - Alors $Dt(n+1) = Dt + T_{sp} - (t - ti_{slow})$    *(Mise à jour conditionnée)*
  - Et $ti_{slow} = t$             *(Mise à jour conditionnée)*
- $t_{préc} = t$              *(Mise à jour systématique)*

Le terme $(t - t_{préc})/2$ correspond à la moitié de la durée de la tâche rapide courante et permet de cibler au plus près $Dt$, y compris par anticipation.

En outre, le procédé selon l'invention peut mettre en œuvre les étapes suivantes (illustrées notamment sur les figures 2 et 3, ou dans les demandes de brevet WO2021/259662 et WO2022/078778, ou dans les demandes de brevet portant les numéros de dépôt FR21/13962 et FR22/00475), en temps réel :

a. On détermine, au moyen du calculateur et à la fréquence temporelle de calcul, des consignes de courant en fonction d'au moins une consigne de couple et/ou d'une consigne de vitesse de rotation et/ou d'une variable de fonctionnement ;

b. On détermine, au moyen du calculateur, des consignes de tension à partir des consignes de courant déterminées ;

c. On génère, au moyen du calculateur, un signal de commande de commutation de l'onduleur à partir des consignes de tension déterminées, la fréquence dudit signal de commande de commutation étant la fréquence de découpage ; et

d. On commande l'onduleur au moyen du signal de commutation généré.

Ainsi, on commande l'onduleur avec une fréquence de découpage qui limite les harmoniques, et avec des calculs à une fréquence temporelle de calcul qui limite les problèmes de sécurité de la commande (avec une limitation des phénomènes aléatoires contradictoires).

Selon un mode de réalisation de l'invention, on peut mettre en œuvre en outre au moins une étape d'estimation d'au moins une température et/ou d'au moins un flux magnétique au sein de la machine électrique, au moyen du calculateur et à une fréquence temporelle de calcul. L'étape d'estimation peut être mise en œuvre à une fréquence temporelle de calcul (pouvant être différente de la fréquence temporelle de calcul de détermination des consignes de courant).

Pour ce mode de réalisation, on peut déterminer les consignes de courant et/ou les consignes de tension en fonction de l'estimation d'au moins une température et/ou d'au moins un flux magnétique. Ainsi, la commande détermine une représentation d'une grandeur physique de la machine électrique, et la commande est donc adaptée au fonctionnement de la machine électrique.

En outre, l'invention concerne un système de commande d'une machine électrique synchrone comprenant un onduleur pourvu de bras de commutation, un calculateur et une mémoire configurée pour mettre en œuvre les étapes du procédé de commande selon l'une quelconque des variantes précédentes ou selon l'une quelconque des combinaisons de variantes précédentes, pour appliquer la fréquence de découpage à l'onduleur, et pour appliquer ladite fréquence temporelle de calcul d'au moins une fonction de calcul du calculateur.

De préférence, la machine électrique peut être une machine synchro-réluctante assistée par des aimants permanents ou une machine synchrone à aimants permanents.

Conformément à une mise en œuvre, le système de commande peut être notamment conforme aux modes de réalisation des figures 2 et 3. Toutefois, le système de commande peut être adapté à d'autres modes de réalisation, par exemple ceux décrits dans les demandes de brevet WO2021/259662 et WO2022/078778, ou dans les demandes de brevet portant les numéros de dépôt FR21/13962 et FR22/00475.

<u>Exemple d'application :</u>

Les caractéristiques et avantages du procédé selon l'invention apparaîtront plus clairement à la lecture de l'exemple d'application ci-après.

Un exemple de mise en place du procédé selon un mode de réalisation de l'invention est donné ci-dessous, pour une machine électrique synchrone de 4 paires des pôles, et avec un « découpage » de la fréquence électrique par un facteur 12 (en d'autres termes, pour cet exemple, on considère que $f_{dec} = 12 \times f_e$). La tâche de calcul « lente » possède idéalement une période d'une milliseconde (en d'autres termes la fréquence temporelle de calcul de référence est d'1 kHz).

On applique à la machine électrique une variation de régime (vitesse de rotation mécanique) non linéaire depuis environ 10000 tr/min jusqu'à 15000 tr/min. La figure 7 illustre le régime de la machine électrique $\omega$ en fonction du temps T en ms.

On applique le procédé selon l'invention, et on détermine un coefficient de proportionnalité k1 entre la vitesse de découpage et la vitesse temporelle de calcul. La figure 8 illustre le coefficient de proportionnalité k1 en fonction du temps T en ms. On peut constater que ce coefficient est bien dynamiquement adapté et systématiquement entier.

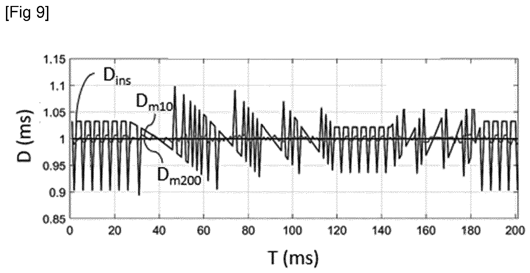

On applique la fréquence temporelle de calcul déterminée. La figure 9 illustre la période D en ms du calcul (liée à la fréquence temporelle de calcul) en fonction du temps en ms. Sur cette figure, les périodes D sont illustrés à trois échelles : $D_{ins}$ correspond à la période instantanée, c'est-à-dire la période de calcul courante, $D_{m10}$ correspond à la moyenne de la période instantanée sur 10 ms, et $D_{m200}$ correspond à la moyenne de la période instantanée sur 200ms. On peut constater que :

- dès l'échelle de 10 ms, la période effective est à moins de 1% de la référence (1 ms).
- dès l'échelle de 200 ms, l'erreur est de l'ordre d'un pour 10000 par rapport à la référence.

Par conséquent, la moyenne de la fréquence temporelle de calcul est très proche de la fréquence temporelle de calcul de référence. Ainsi, le procédé selon l'invention garantit bien qu'en moyenne, sur une durée réduite, la période effective de la tâche temporelle est à la référence choisie.

**Revendications**

**1.** Procédé de commande d'une machine électrique (MEL) pilotée par un onduleur (OND) commandé par un calculateur (CAL), ledit procédé de commande étant conçu pour faire appliquer une fréquence de découpage du courant électrique par ledit onduleur (OND) à ladite machine électrique, et pour faire réaliser un calcul à au moins une fonction dudit calculateur à une fréquence temporelle de calcul, chaque fonction dudit calculateur ayant une fréquence temporelle de calcul de référence, mettant en œuvre l'étape suivante:

    a. On acquiert une fréquence électrique de ladite machine électrique (MEL) ;

et **caractérisé en ce qu'**on met en œuvre les étapes supplémentaires suivantes:

    b. On applique une fréquence de découpage audit onduleur (OND) de telle sorte que ladite fréquence de découpage soit proportionnelle à ladite fréquence électrique déterminée, un coefficient de proportionnalité entre ladite fréquence de découpage et ladite fréquence électrique étant un nombre entier ; et
    c. On applique une fréquence temporelle de calcul à au moins une fonction dudit calculateur (CAL) de telle sorte que la fréquence de découpage soit proportionnelle à ladite fréquence temporelle de calcul, un coefficient de proportionnalité entre ladite fréquence de découpage et ladite fréquence temporelle de calcul étant un nombre entier variable, et de telle sorte que la moyenne de la fréquence temporelle de calcul soit égale à ladite fréquence

**EP 4 380 038 B1**

temporelle de calcul de référence.

2. Procédé de commande selon la revendication 1, dans lequel ladite fonction dudit calculateur (CAL) est choisi parmi une fonction de détermination des consignes de courant (CONS), un estimateur thermique (EST), un estimateur de flux magnétique (EST).

3. Procédé de commande selon l'une des revendications précédentes, dans lequel on détermine ladite fréquence électrique de ladite machine électrique au moyen d'une formule $f_e = 2\pi\omega_e$ avec $f_e$ ladite fréquence électrique, $\omega_e$ une vitesse de rotation électrique du rotor de ladite machine électrique.

4. Procédé de commande selon la revendication 3, dans lequel on détermine ladite vitesse de rotation électrique par multiplication d'une vitesse de rotation mécanique du rotor de ladite machine électrique par le nombre de paires de pôles de ladite machine électrique.

5. Procédé de commande selon la revendication 4, dans lequel ladite vitesse de rotation mécanique de ladite machine électrique est mesurée au moyen d'un capteur (CAP) de position angulaire ou d'un capteur de vitesse de rotation.

6. Procédé de commande selon l'une des revendications précédentes, dans lequel ladite moyenne de la fréquence temporelle de calcul est déterminée sur une fenêtre temporelle.

7. Procédé de commande selon l'une des revendications précédentes, dans lequel on met en œuvre les étapes suivantes :

   a. On détermine, au moyen dudit calculateur (CAL) et à ladite fréquence temporelle de calcul, des consignes de courant en fonction d'au moins une consigne de couple et/ou d'une consigne de vitesse de rotation ;
   b. On détermine, au moyen dudit calculateur (CAL), des consignes de tension à partir des consignes de courant déterminées ;
   c. On génère, au moyen dudit calculateur (CAL), un signal de commande de commutation dudit onduleur à partir desdites consignes de tension, la fréquence dudit signal de commande de commutation étant ladite fréquence de découpage ; et
   d. On commande ledit onduleur (OND) au moyen dudit signal de commutation.

8. Procédé de commande selon la revendication 7, dans lequel on met en œuvre en outre au moins une étape d'estimation (EST) d'au moins une température et/ou d'au moins un flux magnétique au sein de ladite machine électrique, au moyen dudit calculateur (CAL) et à ladite fréquence temporelle de calcul.

9. Procédé de commande selon la revendication 8, dans lequel on détermine lesdites consignes de courant et/ou lesdites consignes de tension au moyen de ladite estimation d'au moins une température et/ou d'au moins un flux magnétique au sein de ladite machine électrique.

10. Système de commande d'une machine électrique (MEL) comprenant un onduleur (OND) pourvu de bras de commutation, un calculateur (CAL) et une mémoire configurée pour mettre en œuvre les étapes du procédé de commande selon l'une des revendications précédentes pour appliquer ladite fréquence de découpage dudit onduleur (OND) et pour appliquer ladite fréquence temporelle de calcul d'au moins une fonction dudit calculateur (CAL), de préférence ladite machine électrique (MEL) est une machine synchro-réluctante assistée par des aimants permanents ou une machine synchrone à aimants permanents.

**Patentansprüche**

1. Verfahren zur Steuerung einer elektrischen Maschine (MEL), die durch einen Wechselrichter (OND) angesteuert wird, der durch einen Rechner (CAL) gesteuert wird, wobei das Verfahren zur Steuerung dazu ausgelegt ist, eine Schaltfrequenz zum Schalten des elektrischen Stroms durch den Wechselrichter (OND) auf die elektrische Maschine anwenden zu lassen und eine Berechnung für mindestens eine Funktion des Rechners mit einer zeitlichen Rechenfrequenz ausführen zu lassen, wobei jede Funktion des Rechners eine zeitliche Referenzrechenfrequenz hat, den folgenden Schritt durchführend:

   a. Man erfasst eine elektrische Frequenz der elektrischen Maschine (MEL); und **dadurch gekennzeichnet,**

**EP 4 380 038 B1**

**dass** man die folgenden zusätzlichen Schritte durchführt:

b. Man wendet eine Schaltfrequenz auf den Wechselrichter (OND) an, so dass die Schaltfrequenz proportional zu der bestimmten elektrischen Frequenz ist, wobei ein Proportionalitätskoeffizient zwischen der Schaltfrequenz und der elektrischen Frequenz eine ganze Zahl ist; und
c. Man wendet eine zeitliche Rechenfrequenz auf mindestens eine Funktion des Rechners (CAL) an, so dass die Schaltfrequenz proportional zu der zeitlichen Rechenfrequenz ist, wobei ein Proportionalitätskoeffizient zwischen der Schaltfrequenz und der zeitlichen Rechenfrequenz eine variable ganze Zahl ist, und so, dass der Mittelwert der zeitlichen Rechenfrequenz gleich der zeitlichen Referenzrechenfrequenz ist.

2. Verfahren zur Steuerung nach Anspruch 1, wobei die Funktion des Rechners (CAL) unter einer Stromsollwerte-Bestimmungsfunktion (CONS), einem thermischen Schätzer (EST), einem Magnetflussschätzer (EST) gewählt ist.

3. Verfahren zur Steuerung nach einem der vorhergehenden Ansprüche, wobei man die elektrische Frequenz der elektrischen Maschine mittels einer Formel $f_e = 2_{\Pi \omega e}$ bestimmt, wobei $f_e$ die elektrische Frequenz und $\omega_e$ eine elektrische Drehzahl des Rotors der elektrischen Maschine ist.

4. Verfahren zur Steuerung nach Anspruch 3, wobei man die elektrische Drehzahl durch Multiplikation einer mechanischen Drehzahl des Rotors der elektrischen Maschine mit der Polpaarzahl der elektrischen Maschine bestimmt.

5. Verfahren zur Steuerung nach Anspruch 4, wobei die mechanische Drehzahl der elektrischen Maschine mittels eines Winkelpositionssensors (CAP) oder eines Drehzahlsensors gemessen wird.

6. Verfahren zur Steuerung nach einem der vorhergehenden Ansprüche, wobei der Mittelwert der zeitlichen Rechenfrequenz über ein Zeitfenster bestimmt wird.

7. Verfahren zur Steuerung nach einem der vorhergehenden Ansprüche, bei dem man die folgenden Schritte durchführt:

a. Man bestimmt, mittels des Rechners (CAL) und mit der zeitlichen Rechenfrequenz, Stromsollwerte in Abhängigkeit von mindestens einem Drehmomentsollwert und/oder einem Drehzahlsollwert;
b. Man bestimmt, mittels des Rechners (CAL), Spannungssollwerte ausgehend von den bestimmten Stromsollwerten;
c. Man erzeugt, mittels des Rechners (CAL), ein Schaltsteuersignal für den Wechselrichter ausgehend von den Spannungssollwerten, wobei die Frequenz des Schaltsteuersignals die Schaltfrequenz ist; und
d. Man steuert den Wechselrichter (OND) mittels des Schaltsignals.

8. Verfahren zur Steuerung nach Anspruch 7, wobei man ferner mindestens einen Schritt des Schätzens (EST) mindestens einer Temperatur und/oder mindestens eines Magnetflusses in der elektrischen Maschine mittels des Rechners (CAL) und mit der zeitlichen Rechenfrequenz durchführt.

9. Verfahren zur Steuerung nach Anspruch 8, wobei man die Stromsollwerte und/oder die Spannungssollwerte mittels der Schätzung mindestens einer Temperatur und/oder mindestens eines Magnetflusses in der elektrischen Maschine bestimmt.

10. System zur Steuerung einer elektrischen Maschine (MEL), umfassend einen Wechselrichter (OND), der mit einem Schaltarm versehen ist, einen Rechner (CAL) und einen Speicher, der dazu ausgestaltet ist, die Schritte des Verfahrens zur Steuerung nach einem der vorhergehenden Ansprüche durchzuführen, um die Schaltfrequenz des Wechselrichters (OND) anzuwenden und um die zeitliche Rechenfrequenz mindestens einer Funktion des Rechners (CAL) anzuwenden, wobei die elektrische Maschine (MEL) bevorzugt eine durch Permanentmagnete unterstützte Synchron-Reluktanzmaschine oder eine Synchronmaschine mit Permanentmagneten ist.

**Claims**

1. Method for controlling an electric machine (MEL) controlled by an inverter (OND) controlled by a computer (CAL), said control method being designed to make said inverter (OND) apply a switching frequency of the electric current to said electric machine, and to make at least one function of said computer perform a computation at a computation time

12

frequency, each function of said computer having a reference computation time frequency, implementing the following step:

> a. an electrical frequency of said electric machine (MEL) is acquired; and **characterized in that** the following additional steps are implemented:
>
>> b. a switching frequency is applied to said inverter (OND) such that said switching frequency is proportional to said determined electrical frequency, a coefficient of proportionality between said switching frequency and said electrical frequency being an integer; and
>> c. a computation time frequency is applied to at least one function of said computer (CAL) such that the switching frequency is proportional to said computation time frequency, a coefficient of proportionality between said switching frequency and said computation time frequency being a variable integer, and such that the average of the computation time frequency is equal to said reference computation time frequency.

2. Control method according to Claim 1, wherein said function of said computer (CAL) is chosen from a function for determining the current setpoints (CONS), a thermal estimator (EST) and a magnetic flux estimator (EST).

3. Control method according to one of the preceding claims, wherein said electrical frequency of said electric machine is determined by means of a formula $f_e = 2\pi\omega_e$ with $f_e$ being said electrical frequency and $\omega_e$ an electrical rotation speed of the rotor of said electric machine.

4. Control method according to Claim 3, wherein said electrical rotation speed is determined by multiplying a mechanical rotation speed of the rotor of said electric machine by the number of pairs of poles of said electric machine.

5. Control method according to Claim 4, wherein said mechanical rotation speed of said electric machine is measured by means of an angular position sensor (CAP) or of a rotation speed sensor.

6. Control method according to one of the preceding claims, wherein said average of the computation time frequency is determined over a time window.

7. Control method according to one of the preceding claims, wherein the following steps are implemented:

> a. current setpoints are determined by means of said computer (CAL) and at said computation time frequency as a function of at least one torque setpoint and/or one rotation speed setpoint;
> b. voltage setpoints are determined by means of said computer (CAL) on the basis of the determined current setpoints;
> c. a switching control signal for said inverter is generated by means of said computer (CAL) on the basis of said voltage setpoints, the frequency of said switching control signal being said switching frequency; and
> d. said inverter (OND) is controlled by means of said switching signal.

8. Control method according to Claim 7, wherein at least one step of estimating (EST) at least one temperature and/or at least one magnetic flux within said electric machine is also implemented, by means of said computer (CAL) and at said computation time frequency.

9. Control method according to Claim 8, wherein said current setpoints and/or said voltage setpoints are determined by means of said estimation of at least one temperature and/or of at least one magnetic flux within said electric machine.

10. System for controlling an electric machine (MEL) comprising an inverter (OND) provided with switching arms, a computer (CAL) and a memory which is configured to implement the steps of the control method according to one of the preceding claims in order to apply said switching frequency of said inverter (OND) and in order to apply said computation time frequency of at least one function of said computer (CAL); preferably, said electric machine (MEL) is a permanent magnet assisted synchronous reluctance machine or a permanent magnet synchronous machine.

[Fig 1]

[Fig 2]

[Fig 3]

[Fig 4]

[Fig 5]

[Fig 6]

[Fig 7]

[Fig 8]

[Fig 9]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3051296 A1
- FR 3050083 B1
- FR 3042926 B1
- WO 2021259662 A
- WO 2022078778 A
- FR 2113962
- FR 2200475

**Littérature non-brevet citée dans la description**

- **A. O. DI TOMMASO et al.** Practical implementation of a synchronous PWM strategy for low switching frequency FOC of IM drives with ATSAM3X8E microcontroller. *2021 Sixteenth International Conference on Ecological Vehicles and Renewable Energies (EVER)*, May 2021